# EUROPEAN PATENT SPECIFICATION

(11) **EP 1 383 710 B1**
(45) Date of publication and mention of the grant of the patent: **28.03.2007**
(21) Application number: 02733592.6
(22) Date of filing: 24.04.2002
(51) Int. Cl.: C02F 1/28, C02F 1/62, B01D 15/02

(54) **APPARATUS AND METHOD FOR THE REMOVAL OF A CONTAMINANT FROM A FLUID COMPRISING SAID CONTAMINANT**
VORRICHTUNG UND VERFAHREN ZUR ENTFERNUNG EINES SCHMUTZSTOFFS AUS EINEM DIESEN ENTHALTENDEN FLUID
APPAREIL ET PROCEDE D'EXTRACTION D'UN CONTAMINANT A PARTIR D'UN FLUIDE CONTENANT CE CONTAMINANT

(30) Priority: 27.04.2001 NL 1017959
(43) Date of publication of application: 28.01.2004
(73) Proprietor: Research Program Counselling B.V., 5441 XV Oeffelt (NL)
(72) Inventor: VAN DE WEIJER, Franciscus, Johannes, Maria, NL-5441 XV Oeffelt (NL)
(74) Representative: du Pont, Jeroen
(86) International application number: PCT/NL2002/000273
(87) International publication number: WO 2002/088027

(56) References cited:
- EP-A- 0 279 964
- WO-A-89/09192
- WO-A-94/06717
- DE-A- 19 800 610
- GB-A- 1 029 084
- US-A- 4 133 759
- US-A- 4 202 770
- US-A- 4 371 442
- US-A- 4 547 286
- US-A- 4 565 633
- US-A- 5 292 436
- US-A- 5 626 763
- DATABASE WPI Section Ch, Week 197929 Derwent Publications Ltd., London, GB; Class D15, AN 1979-53341B XP002188585 & JP 54 071078 A (MURAKAMI E), 7 June 1979 (1979-06-07)
- PATENT ABSTRACTS OF JAPAN vol. 1996, no. 11, 29 November 1996 (1996-11-29) & JP 08 182984 A (TOTO LTD), 16 July 1996 (1996-07-16)

## Description

The present invention relates to an apparatus for the removal of a contaminant from a fluid comprising said contaminant, in particular for the removal of metals and/or heavy metals from water which is contaminated by metals and/or heavy metals, which apparatus comprises a reaction vessel in which it is intended to treat the contaminated fluid with a particulate treatment agent, which reaction vessel comprises an inlet for the contaminated fluid which is to be treated and an outlet for the cleaned fluid.

US 5,626,763 discloses a mass transfer apparatus comprising a conical casing in which an absorbent medium is present such that it is stratified, with larger diameter granules below and smaller diameter granules higher. Part of the medium is constrained near the fluid inlet by a screen.

GB 1,029,084 discloses an apparatus for purifying liquids. The apparatus comprises a bed of adsorbent granules, and an at least partly foraminous member that constrains the top of the bed, to limit fluidization, to thereby increase efficiency. The apparatus may comprise a retarding cone, with the apex pointing upward, to limit adsorbent downflow, during regeneration.

US 4,133,759 discloses a liquid purification apparatus in which a mass of adsorbent material is accommodated within a column such that a portion of the materials forms a settling layer to avoid any possible fluidization and/or expansion of another portion of the material. Furthermore, rectifying plate members may be present.

An apparatus of the type mentioned in the preamble is known, for example, from US patent US-A 4,156,647. US-A 4,156,647 describes an apparatus and a method for the removal of impurities, such as heavy metals, from fluids, the heavy metals generally being present in small quantities. According to US-A 4,156,647, the fluid which comprises impurities is brought into contact with a loose, particulate treatment agent, such as milled shells, which is used to remove the impurity from the stream of fluid by means of a reaction, ion exchange or adsorption. The treatment material is retained in the reactor vessel since the wall of the reactor vessel is provided with a large number of small openings which are each filled with an inert, compact, finely distributed filter material. While the apparatus described in US-A 4,156,647 is operating, fluid which has been treated in this way is discharged via the small openings, while the particulate treatment agent remains in the reactor vessel. To prevent the openings in the reactor vessel from becoming blocked, there are means for scraping the treatment agent off the openings in the reactor vessel provided on the inside of the reactor vessel.

One drawback of the abovementioned apparatus is that it has moving parts, which require a high degree of maintenance. Furthermore, if a treatment agent with a very small particle size is used, blockages may easily occur in the openings in the reactor vessel, so that operation of the apparatus has to be interrupted.
The prior art has also disclosed many methods and apparatuses for removing contaminants using a static bed of treatment agents. The use of a static bed has various drawbacks, such as the occurrence of "bypasses", which results in reduced efficiency of removal.

It is an object of the present invention to avoid the above drawbacks and to provide a very simple and efficient apparatus for the removal of a contaminant from a fluid comprising said contaminant, and in particular for the removal of (heavy) metals from water contaminated with (heavy) metals. According to the present invention, this object is achieved by an apparatus for the removal of a contaminant from a fluid comprising said contaminant, in particular for the removal of heavy metals from water which is contaminated by heavy metals, which apparatus comprises a reaction vessel in which it is intended to treat the contaminated fluid with a particulate treatment agent, which reaction vessel, on its underside, is of substantially conical design and comprises an inlet for the contaminated fluid which is to be treated and an outlet for the cleaned fluid, the outlet for cleaned fluid comprising an overflow and the apparatus being free of mechanical stirring means which, during use, can come into contact with the treatment agent, and the inlet for contaminated fluid opening out in the vicinity of the bottom of the reaction vessel, and the apparatus comprising flow-control means in the inlet for contaminated fluid, all this in such a manner that, when the apparatus is in use, a dynamic bed of the treatment agent is created, and that the treatment agent, as a result of a settling action under the influence of the force of gravity, substantially entirely remains in the reaction vessel.

The treatment agent substantially comprises material with a particle size of less than 100 µm. It has been found that in this way very favourable cleaning results can be obtained.

To optimize contact between the treatment agent and the contaminated fluid when the apparatus is operating, the reaction vessel also contains a body with an external shape which is substantially congruent with the internal shape of the reaction vessel but has smaller dimensions, all this in such a manner that, as seen from the inlet for contaminated fluid, in use the speed of displacement of the contaminated fluid is reduced in the downstream direction.

In this way, an annular passage is formed between the closed body and the inner wall of the reactor vessel. In practice, it has been found that this leads to very good mixing of the treatment agent in the contaminated fluid.

The fact that the apparatus according to the invention is free of mechanical stirring means and is substantially free of other moving parts which can come into contact with the treatment agent during use means that the apparatus is very low-maintenance. The absence of such moving parts also avoids damage thereto, with all the associated problems.

A further advantage of the apparatus according to the invention is that it is very easy to produce at low cost. Also, the apparatus according to the invention, on account of its simple design, can be of modular design, can easily be moved and can therefore be used at any desired location. The apparatus also comprises a relatively small number of components.

The fact that the apparatus according to the invention is operated in a dynamic bed means that there is very efficient contact between the treatment agent and the contaminated water. "Dynamic bed" is a term which is known in the specialist field and therefore requires no further explanation. The dynamic bed provides that the particles of the treatment agent are not fixed in position and time.

It has been found that, if a dynamic bed is not used, various problems may arise - such as the formation of "bypasses" which result in less effective removal of contaminants.

According to the present invention, the underside of the reaction vessel is of substantially conical design. In this case, the bottom of the reaction vessel is located in the vertex of the cone.

When the apparatus is operating, this improves contact between the contaminated fluid which is to be purified and the treatment agent. The treatment agent, once it has been raised upward, will always move back toward the vertex of the cone at the bottom of the reaction vessel, i.e. toward the inlet for contaminated fluid. The person skilled in the art will understand that, for this purpose, the underside may also be of slightly parabolic design, provided only that the desired effect is achieved.

Preferably, the body and the reaction vessel are positioned in such a manner with respect to one another that the annular channel widens gradually in the downstream direction.

It is preferable for the body to be open on the top side and on the underside, with the result that the treatment agent can return via the inner side of the body to the underside of the reaction vessel. If appropriate, flow-influencing means may also be present at the opening on the underside of the body, in order to further positively influence the flow profile of the treatment agent in the reaction vessel.

It has proven expedient if the inlet for the contaminated fluid opens out in the bottom of the reaction vessel.

As a result, when the apparatus is operating, the contaminated fluid comes into contact with a large proportion of the treatment agent, since the treatment agent always moves back toward the underside of the reaction vessel as a result of a settling action. Therefore, unused treatment agent cannot collect at the bottom of the reactor vessel, but rather is constantly entrained by the fluid supplied.

Furthermore, it is preferable for the apparatus also to comprise an inlet and an outlet for the treatment agent.

This makes it easy to renew the treatment agent when it is found that the cleaning action of the treatment agent is decreasing. It is also possible, if a particular treatment agent is required for a particular contaminated fluid, for this particular treatment agent to be introduced into the reaction vessel in a simple way.

Furthermore, it is advantageous if there are filter means between the interior of the reaction vessel and the outlet for the contaminated fluid, in order to retain any entrained treatment agent.

Although substantially all the treatment agent remains in the reaction vessel, on account of a settling action, this measure makes it possible to ensure without any doubt that the cleaned fluid which is discharged is free of treatment agent.

Furthermore, it is preferable for the flow-control means to be able to generate a pulsed flow of contaminated fluid, preferably in such a manner that the pulsed flow varies in a range from 80-120%, more preferably 90-110%, with respect to the nominal flow. This makes it easy to form a favourable dynamic bed. The person skilled in the art will understand that the term "nominal flow" is understood to mean the mean flow (i.e. 100%).

Furthermore, the present invention provides a method for the removal of a contaminant from a fluid comprising said contaminant, in particular for the removal of heavy metals from water contaminated with heavy metals, using the apparatus according to the invention, which method comprises the steps of introducing a quantity of a particulate treatment agent into the reaction vessel, bringing contaminated fluid, which is introduced into the reaction vessel in the vicinity of the bottom via the inlet for the contaminated fluid, into contact with the particulate treatment agent, the flow-control means in the inlet being set in such a manner that the particulate treatment agent is present in the form of a dynamic bed, that purified fluid is able to leave the reaction vessel via the overflow, and that the particulate treatment agent substantially completely remains in the reaction vessel on account of a settling action under the influence of the force of gravity.

In an advantageous embodiment of the method, the cleaned fluid is cleaned at least one further time with the aid of an additional apparatus according to the invention.

In this way, the treatment agents in the separate apparatuses can be set in such a manner that a specifically selected impurity, for example, a heavy metal such as hexavalent chromium which can only be removed under certain conditions, can be removed.

It is also possible, by using an additional apparatus, to provide for preliminary and secondary purification of the contaminated fluid.

It is preferable for the flow-control means to be set in such a manner that a pulsed flow is obtained, preferably in such a manner that the pulsed flow varies in a range from 80-120%, more preferably 90-110%, with respect to the nominal flow.

The treatment agent used is advantageously CaCO₃-containing material, in particular milled shell material.

It has been found that this material achieves very good cleaning results and, moreover, can easily be obtained in bulk quantities with a desired particle size.

According to the method of the invention, the treatment agent substantially comprises material with a particle size of less than 100 µm.

Using material with a particle size of less than 100 µm makes it possible to additionally improve the cleaning of the contaminated fluid.

According to the invention, the term "treatment agent" is understood as meaning any material which is suitable for removing contaminants from the contaminated fluid by a chemical reaction, ion exchange or adsorption or any other suitable method.

As has already been stated above, according to the present invention it is preferable to use milled shell material. Examples of other suitable treatment agents are activated carbon, MACROSORB^{®}, chitosan, etc.

According to the present invention, the term "treat" is understood as meaning any form of removal or deactivation of the fluid, for example by reaction, adsorption, absorption, ion exchange, etc., in such a manner that the contaminant remains in the reaction vessel with the treatment agent while the cleaned fluid leaves the reaction vessel via the overflow.

The person skilled in the art will understand that the apparatus and method according to the invention are suitable for both continuous and batch-type processes.

The present invention will be explained in more detail below with reference to the appended drawing, in which:
Figure 1 shows a diagrammatic cross section through the apparatus according to the present invention;
Figure 2 shows a diagrammatic cross section through an alternative embodiment of the apparatus according to the invention; and
Figures 3a-3c show diagrammatic cross sections through alternative embodiments of the apparatus according to the invention.

Identical reference numerals denote identical components.

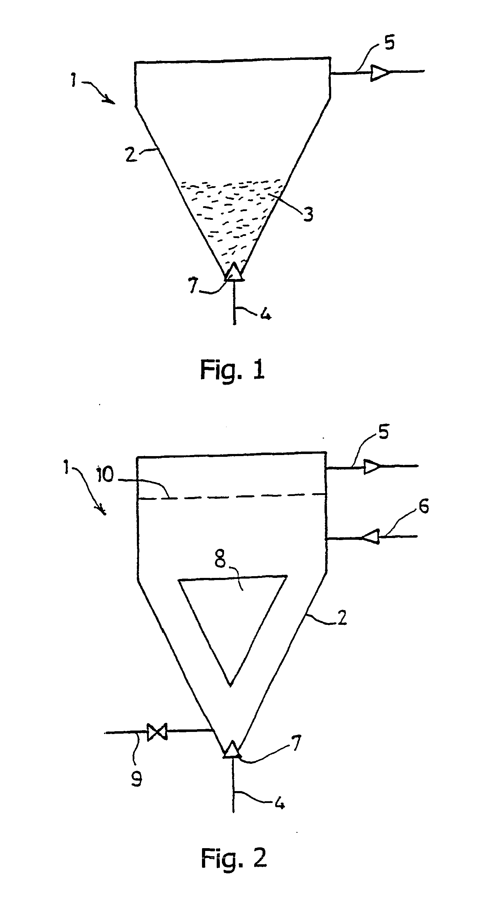

Figure 1 shows an apparatus 1 for the removal of heavy metals from water contaminated by heavy metals. The apparatus 1 comprises a reaction vessel 2 in which it is intended to treat water which is contaminated with heavy metals using a dynamic bed of particulate treatment agent 3 which preferably substantially comprises suitable material with a particle size of less than 100 µm. In the vicinity of the bottom, the reaction vessel 2 comprises an optionally pulsed inlet 4 for the water contaminated with heavy metals which is to be treated and an overflow 5 for the cleaned water. For this purpose, flow-control means 7, such as a controllable valve, are present in or close to the inlet 4 for contaminated water. The bottom of the vessel 2 is of substantially conical design. The fluid flowing into the reaction vessel 2 itself represents the driving force for obtaining the desired dynamics of the treatment agent 3.

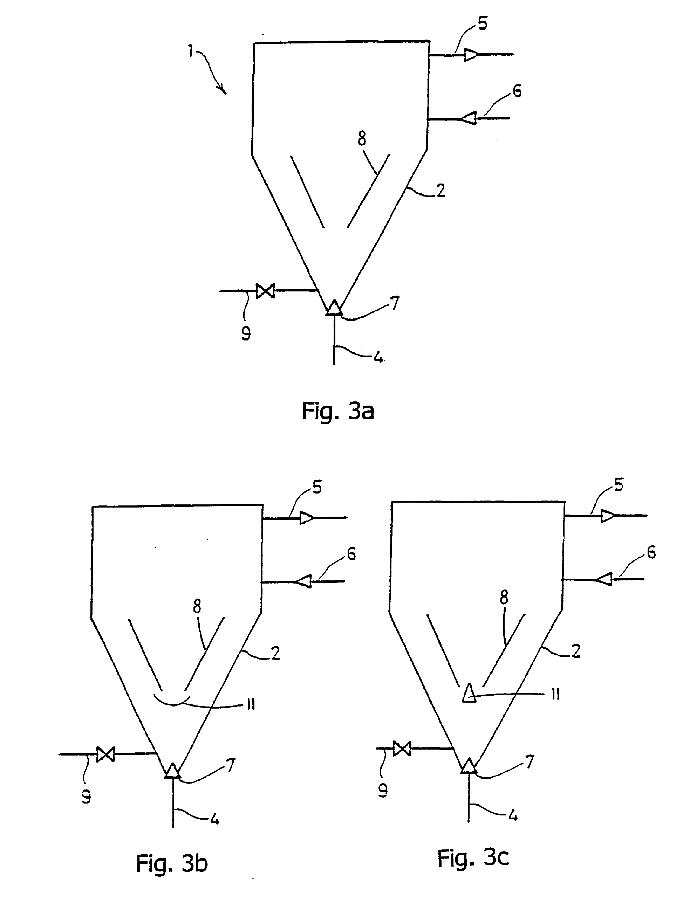

Figure 2 also shows an apparatus 1 for the removal of heavy metals, having a reaction vessel 2, the underside of the reaction vessel 2 once again being of substantially conical design. Furthermore, the reaction vessel 2 includes a closed body 8 with an external shape which is substantially congruent with the internal shape of the reaction vessel 2 but has smaller dimensions. The internal shape of the reaction vessel 2 and the closed body 8 are preferably positioned in such a manner that, as seen from the underside of the reaction vessel 2, there is a widening between reaction vessel 2 and body 8. This provides in a simple but effective way for the speed of displacement of the contaminated fluid to be reduced in the downstream direction. This is explained in more detail with reference to Fig. 3a-3c. The reaction vessel 2 is also provided with an inlet 6 and an outlet 9 for the treatment agent 3. Furthermore, there are filter means 10 between the interior of the reaction vessel 2 and the outlet 5 for cleaned water, in order to retain any treatment agent 3 which is entrained while the apparatus 1 is operating.

In the embodiment of the apparatus 1 according to the present invention which is illustrated in Figure 2, the underside of the reaction vessel 2 is of substantially conical design, and moreover above this there is an extended top side, with the result that the zone in which the treatment agent 3 can settle is increased in size. If desired, the extended top side may be designed to be vertically adjustable, in which case the correct height can be selected as a function of, for example, the sedimentation rate of the treatment agent used.

When the apparatus 1 shown in Figures 1 and 2 is operating, water which is contaminated with heavy metals is introduced into the reaction vessel 2 via the inlet 4. Operation of the flow-control means 7 makes it possible to set a flow profile which is such that the treatment agent 3 remains below the overflow 5 as a result of a settling action under the influence of the force of gravity. The flow-control means 7 may be set in such a manner that the treatment agent 3 is pushed upward, but not so far that it is discharged with the cleaned water via the overflow 5.

The contact between the treatment agent 3, such as for example milled shell material, and the contaminated water is very efficient, since treatment agent 3 which is forced upward returns to the underside of the reaction vessel 2 as a result of a settling action and via the sloping walls of the reaction vessel.

In the embodiment which is shown in Figure 2, contact between contaminated water and treatment agent, and also the settling action, are improved by the body 8. If desired, the top side of the body may be designed in such a manner that any treatment agent 3 which is deposited thereon does not remain in place. This can be achieved, for example, by providing the body 8 with surfaces which slope downwards and/or a coating, such as Teflon, on its top side. Alternatively, the body 8 may be open at its top side, so that the treatment agent 3 is returned to the bottom via openings or slots which are present for this purpose (cf. Figures 3a-3c). As a result, the treatment agent 3 is thereby not passivated, but rather continues to circulate during the treatment process in the reaction vessel 2.

If desired, in addition to the flow-control means 7 it is possible for additional flow-control means (not shown) to be provided in the vicinity of the inlet 4 for contaminated water, in order to improve contact between treatment agent 3 and the contaminated water. Consideration may be given to air-injection or liquid-injection systems.

After the contaminated water has been treated with the treatment agent 3, the cleaned water will be discharged via the overflow 5 while the treatment agent 3 remains in the reactor vessel 2 as a result of a settling action. In the embodiment which is shown in Figure 2, there is a filter 10 for retaining any reagent 3 which is entrained.

The overflow 5 of the reaction vessel 2 may be connected to the inlet of a subsequent reaction vessel (not shown). If desired, this subsequent reaction vessel may be filled with a different treatment agent, in order to remove specific heavy metals from the flow of water. It is also possible for the overflow 5 to be positioned precisely above the reaction vessel 2, as the highest point of the apparatus 1. This makes it easy for any trapped air or other gas which is present to escape from the apparatus 1. Obviously, the apparatus 1 may also be provided with vent valves (not shown) to accelerate filling of the reaction vessel 2.

Figures 3a-3c show various embodiments of the body 8 shown in Fig. 2. It can clearly be seen in Fig. 3a-c that a downstream widening is provided between the inner wall of the reactor vessel 2 and the body 8. Moreover, the body 8 is open at the top and bottom, with the result that the treatment agent can be moved downward again.

Figures 3b and 3c show different embodiments of optional plates 11, which provide for particular flow profiles of the treatment agent.

The person skilled in the art will understand that the plates 11 may be designed in numerous different ways. It is also possible for grooves or other means to be used instead of plates, provided that a favourable flow profile of the treatment agent is achieved.

The apparatus according to the invention has been discussed above merely by way of explanation. It will rapidly become clear to the person skilled in the art that further features may be incorporated in the apparatus, for example temperature controllers, pH controllers, etc., which can be incorporated in the apparatus according to the invention according to the specific composition of the water which is to be cleaned. The person skilled in the art will also understand that the method and apparatus are suitable not only for removing heavy metals from water which is contaminated with heavy metals - as has been explained in more detail in connection with the drawing - but also for any other contaminated fluid, for example a stream of water which has been contaminated with organic compounds.

## Claims

1. Apparatus (1) for the removal of a contaminant from a fluid comprising said contaminant, in particular for the removal of heavy metals from water which is contaminated by heavy metals, which apparatus (1) comprises a reaction vessel (2) in which it is intended to treat the contaminated fluid with a particulate treatment agent (3), which reaction vessel (2), on its underside, is of substantially conical design and comprises an inlet (4) for the contaminated fluid which is to be treated and an outlet for the cleaned fluid, the outlet for cleaned fluid comprising an overflow (5) and the apparatus (1) being free of mechanical stirring means which, during use, come into contact with the treatment agent (3), and the inlet (4) for contaminated fluid opening out in the vicinity of the bottom of the reaction vessel (2), and the apparatus (1) comprising flow control means (7) in the inlet (4) for contaminated fluid, all this in such a manner that, when the apparatus (1) is in use, a dynamic bed of the treatment agent (3) is created, and that the treatment agent (3), as a result of a settling action under the influence of the force of gravity, substantially entirely remains in the reaction vessel (2),
wherein the treatment agent substantially comprises material with a particle size of less than 100 µm, and
wherein in the reaction vessel (2) there is also a body with an external shape which is substantially congruent with the internal shape of the reaction vessel (2) but has smaller dimensions, all this in such a manner that, as seen from the inlet (4) for contaminated fluid, in use the speed of displacement of the contaminated fluid is reduced in the downstream direction.

2. Apparatus according to claim 1, wherein the body and the reaction vessel are positioned in such a manner with respect to one another that an annular passage formed therebetween widens gradually in the downstream direction.

3. Apparatus according to claim 1 or 2, **characterized in that** the body is open on the top side and on the underside.

4. Apparatus according to claim 3, wherein flow-influencing means are present at the opening on the underside of the body.

5. Apparatus according to any of the preceding claims, **characterized in that** the inlet (4) for contaminated fluid opens out into the bottom of the reaction vessel (2).

6. Apparatus according to any of the preceding claims, **characterized in that** the apparatus (1) also comprises an inlet (9) and an outlet (9) for the treatment agent (3).

7. Apparatus according to one or more of the preceding claims, **characterized in that** there are filter means (10) between the interior of the reaction vessel (2) and the outlet for the cleaned fluid, for the purpose of retaining any entrained treatment agent.

8. Apparatus according to one or more of the preceding claims, **characterized in that** the flow-control means (7) are able to generate a pulsed flow of contaminated fluid, preferably in such a manner that the pulsed flow varies in a range from 80-120%, more preferably90-110%, with respect to the nominal flow.

9. Method for the removal of a contaminant from a fluid comprising said contaminant, in particular for the removal of heavy metals from water contaminated with heavy metals, using the apparatus according to one or more of the preceding claims, which method comprises the steps of introducing a quantity of a particulate treatment agent into the reaction vessel, bringing contaminated fluid, which is introduced into the reaction vessel in the vicinity of the bottom via the inlet for the contaminated fluid, into contact with the particulate treatment agent, the flow-control means in the inlet being set in such a manner that the particulate treatment agent is present in the form of a dynamic bed that provides that the particles of the treatment agent are not fixed in position and time, that purified fluid is able to leave the reaction vessel via the overflow, and that the particulate treatment agent substantially completely remains in the reaction vessel on account of a settling action under the influence of the force of gravity.

10. Method according to claim 9, **characterized in that** the cleaned fluid is cleaned at least one more time with the aid of an additional apparatus according to one or more of claims 1-7.

11. Method according to claim 9 or 10, **characterized in that** the flow-control means are set in such a manner that a pulsed flow is obtained, preferably in such a manner that the pulsed flow varies in a range from80-120%, more preferably 90-110%, with respect to the nominal flow.

12. Method according to one or more of the preceding claims 9-11, **characterized in that** CaC03-containing material is used as treatment agent.

13. Method according to claim 12, **characterized in that** milled shell material is used as the CaC03-containing material.

14. Method according to one or more of claims 9-13, **characterized in that** the treatment agent substantially comprises material with a particle size of less than 100 µm.

## Patentansprüche

1. Vorrichtung (1) zum Entfernen einer Kontamination aus einem diese enthaltenden Fluid, insbesondere zur Entfernung von Schwermetallen aus damit kontaminiertem Wasser, wobei die Vorrichtung (1) ein Reaktionsgefäß (2) aufweist, in dem das kontaminierte Fluid mit einem korpuskularem Behandlungsmittel (3) zu behandeln ist, wobei das Reaktionsgefäß (2) auf seiner Unterseite im Wesentlichen konische Gestalt hat und einen Einlass (4) für kontaminiertes Fluid aufweist, welches behandelt werden soll, und einen Auslass für gereinigtes Fluid, wobei der Auslass für gereinigtes Fluid einen Überlauf (5) hat und die Vorrichtung (1) frei ist von mechanischen Umrühreinrichtungen, welche im Betrieb in Kontakt kommen mit dem Behandlungsmittel (3), und wobei der Einlass (4) für kontaminiertes Fluid sich nahe dem Boden des Reaktionsgefäßes (2) öffnet, und die Vorrichtung (1) eine Einrichtung (7) zur Strömungssteuerung im Einlass (4) für das kontaminierte Fluid aufweist, all dies derart, dass bei Betrieb der Vorrichtung (1) ein dynamisches Bett aus Behandlungsmittel (3) erzeugt wird und dass das Behandlungsmittel (3) aufgrund einer Absetzung unter dem Einfluss von Schwerkraft im Wesentlichen vollständig im Reaktionsgefäß (2) verbleibt,
wobei das Behandlungsmittel im Wesentlichen Material mit einer Teilchengröße kleiner als 100 µm aufweist, und
wobei in dem Reaktionsgefäß (2) sich ein Körper befindet mit einer äußeren Gestalt, die im Wesentlichen der inneren Gestalt des Reaktionsgefäßes (2) entspricht, jedoch geringere Abmessungen hat, all dies derart, dass, in Richtung des Einlasses (4) für kontaminiertes Fluid gesehen, im Betrieb die Strömungsgeschwindigkeit des kontaminierten Fluids in Richtung stromab reduziert ist.

2. Vorrichtung nach Anspruch 1, wobei der Körper und das Reaktionsgefäß in Bezug zueinander so angeordnet sind, dass ein ringförmiger Durchgang zwischen ihnen sich allmählich in Stromabrichtung aufweitet.

3. Vorrichtung nach einem der Ansprüche 1 oder 2, **dadurch gekennzeichnet, dass** der Körper oben und unten offen ist.

4. Vorrichtung nach Anspruch 3, wobei eine die Strömung beeinflussende Einrichtung an der Öffnung auf der Unterseite des Körpers vorgesehen ist.

5. Vorrichtung nach einem der vorhergehenden Ansprüche, **dadurch gekennzeichnet, dass** der Einlass (4) für kontaminiertes Fluid sich in den Boden des Reaktionsgefäßes (2) öffnet.

6. Vorrichtung nach einem der vorhergehenden Ansprüche, **dadurch gekennzeichnet, dass** die Vorrichtung (1) auch einen Einlass (9) und einen Auslass (9) für das Behandlungsmittel (3) aufweist.

7. Vorrichtung nach einem oder mehreren der vorhergehenden Ansprüche, **dadurch gekennzeichnet, dass** eine Filtereinrichtung (10) zwischen dem Inneren des Reaktionsgefäßes (2) und dem Auslass für gereinigtes Fluid vorgesehen ist, und zwar zum Zwecke des Zurückhaltens von mitgeführtem Behandlungsmittel.

8. Vorrichtung nach einem oder mehreren der vorhergehenden Ansprüche, **dadurch gekennzeichnet, dass** die Einrichtung (7) zur Strömungssteuerung eingerichtet ist, eine gepulste Strömung von kontaminiertem Fluid zu erzeugen, vorzugsweise derart, dass die gepulste Strömung in einem Bereich von 80-120%, besonders bevorzugt 90-110%, in Bezug auf die Nominalströmung variiert.

9. Verfahren zum Entfernen einer Kontamination aus einem diese enthaltenden Fluid, insbesondere zur Entfernung von Schwermetallen aus diese enthaltendem Wasser, unter Verwendung einer Vorrichtung gemäß einem oder mehreren der vorangehenden Ansprüche, wobei das Verfahren die folgenden Schritte aufweist: Einführen einer Menge von teilchenförmigem Behandlungsmittel in das Reaktionsgefäß, Führen von kontaminiertem Fluid, welches in das Reaktionsgefäß eingeführt ist, in die Nähe des Bodens über den Einlass für kontaminiertes Fluid, und zwar in Kontakt mit dem teilchenförmigen Behandlungsmittel, wobei die Einrichtung zur Strömungssteuerung im Einlass so eingestellt ist, dass das teilchenförmige Behandlungsmittel vorliegt in Form eines dynamischen Bettes, welches dafür sorgt, dass die Teilchen des Behandlungsmittels in Zeit und Ort nicht fixiert sind, dass gereinigtes Fluid in der Lage ist, das Reaktionsgefäß über den Überlauf zu verlassen, und dass das teilchenförmige Behandlungsmittel im Wesentlichen vollständig aufgrund der Absetzwirkung durch die Schwerkraft im Reaktionsgefäß verbleibt.

10. Verfahren nach Anspruch 9, **dadurch gekennzeichnet, dass** das gereinigte Fluid zumindest einmal mehr gereinigt wird mit Hilfe einer zusätzlichen Vorrichtung gemäß einem der Ansprüche 1 bis 7.

11. Verfahren nach einem der Ansprüche 9 oder 10, **dadurch gekennzeichnet, dass** die Einrichtung zur Strömungssteuerung so eingestellt ist, dass eine pulsierende Strömung erhalten wird, vorzugsweise derart, dass die pulsierende Strömung in einem Bereich von 80-120%, besonders bevorzugt 90-110%, in Bezug auf die Nominalströmung variiert.

12. Verfahren nach einem oder mehreren der Ansprüche 9 bis 11, **dadurch gekennzeichnet, dass** ein CaCO₃-haltiges Material als Behandlungsmittel eingesetzt wird.

13. Verfahren nach Anspruch 12, **dadurch gekennzeichnet, dass** gemahlenes Muschelmaterial als CaCO₃-haltiges Material eingesetzt wird.

14. Verfahren nach einem oder mehreren der Ansprüche 9-13, **dadurch gekennzeichnet, dass** das Behandlungsmittel im Wesentlichen ein Material enthält mit Teilchengrößen kleiner als 100 µm.

## Revendications

1. Appareil (1) pour l'élimination d'un contaminant d'un liquide comprenant ledit contaminant, en particulier pour l'élimination de métaux lourds d'eau qui est contaminée par des métaux lourds, ledit appareil (1) comprenant une cuve de réaction (2) dans laquelle il est prévu de traiter le liquide contaminé avec un agent de traitement particulaire (3), ladite cuve de réaction (2), sur son côté inférieur, étant de conception sensiblement conique et comprenant une entrée (4) pour le liquide contaminé qui doit être traité et une sortie pour le liquide nettoyé, la sortie pour le liquide nettoyé comprenant un déversoir (5) et l'appareil (1) étant exempt de moyens d'agitation mécanique qui, durant l'utilisation, entrent en contact avec l'agent de traitement (3), et l'entrée (4) pour le liquide contaminé s'ouvrant à proximité du fond de la cuve de réaction (2), et l'appareil (1) comprenant des moyens de commande de flux (7) dans l'entrée (4) pour le liquide contaminé, tout ceci de telle manière que, lorsque l'appareil (1) est en utilisation, un lit dynamique de l'agent de traitement (3) soit créé, et que l'agent de traitement (3), en conséquence d'une action de décantation sous l'influence de la force de gravité, reste sensiblement entièrement dans la cuve de réaction (2),
dans lequel l'agent de traitement comprend substantiellement un matériau ayant une taille de particule de moins de 100 µm, et
dans lequel dans la cuve de réaction (2) se trouve en outre un corps ayant une forme externe qui est sensiblement congruente avec la forme interne de la cuve de réaction (2) mais a des dimensions plus petites, tout ceci de telle manière que, vu depuis l'entrée (4) pour le liquide contaminé, en utilisation la vitesse de déplacement du liquide contaminé soit réduite dans la direction aval.

2. Appareil selon la revendication 1, dans lequel le corps et la cuve de réaction sont positionnés de telle manière l'un par rapport à l'autre qu'un passage annulaire formé entre ceux-ci s'élargisse progressivement dans la direction aval.

3. Appareil selon la revendication 1 ou 2, **caractérisé en ce que** le corps est ouvert sur le côté supérieur et sur le côté inférieur.

4. Appareil selon la revendication 3, dans lequel des moyens influençant le flux sont présents à l'ouverture sur le côté inférieur du corps.

5. Appareil selon l'une quelconque des revendications précédentes, **caractérisé en ce que** l'entrée (4) pour le liquide contaminé s'ouvre dans le fond de la cuve de réaction (2).

6. Appareil selon l'une quelconque des revendications précédentes, **caractérisé en ce que** l'appareil (1) comprend en outre une entrée (9) et une sortie (9) pour l'agent de traitement (3).

7. Appareil selon une ou plusieurs des revendications précédentes, **caractérisé en ce que** des moyens de filtre (10) sont situés entre l'intérieur de la cuve de réaction (2) et la sortie de liquide nettoyé, afin de retenir l'agent de traitement éventuellement entraîné.

8. Appareil selon une ou plusieurs des revendications précédentes, **caractérisé en ce que** les moyens de commande de flux (7) sont capables de générer un flux pulsé de liquide contaminé, de préférence de telle manière que le flux pulsé varie dans une plage de 80 à 120 %, plus préférablement de 90 à 110 %, par rapport au flux nominal.

9. Procédé pour l'élimination d'un contaminant d'un liquide comprenant ledit contaminant, en particulier pour l'élimination de métaux lourds d'eau contaminée avec des métaux lourds, utilisant l'appareil selon une ou plusieurs des recombinants précédentes, ledit procédé comprenant les étapes consistant à introduire une quantité d'un agent de traitement particulaire dans la cuve de réaction, amener le liquide contaminé, qui est introduit dans la cuve de réaction à proximité du fond par l'intermédiaire de l'entrée de liquide contaminé, en contact avec l'agent de traitement particulaire, les moyens de commande de flux dans l'entrée étant disposés de telle manière que l'agent de traitement particulaire soit présent sous la forme d'un lit dynamique qui permet que les particules de l'agent de traitement ne soient pas fixes en position et dans le temps, que le liquide purifié soit capable de quitter la cuve de réaction par le déversoir, et que l'agent de traitement particulaire reste sensiblement complètement dans la cuve de réaction en raison d'une action de décantation sous l'influence de la force de gravité.

10. Procédé selon la revendication 9, **caractérisé en ce que** le liquide nettoyé est nettoyé au moins une fois de plus à l'aide d'un appareil supplémentaire selon une ou plusieurs des revendications 1 à 7.

11. Procédé selon la revendication 9 ou 10, **caractérisé en ce que** les moyens de commande de flux sont configurés de telle manière qu'un flux pulsé soit obtenu, de préférence de telle manière que le flux pulsé varie dans une plage de 80 à 120 %, plus préférablement de 90 à 110 %, par rapport au flux nominal.

12. Procédé selon une ou plusieurs des revendications précédentes 9 à 11, **caractérisé en ce que** un matériau contenant CaCO₃ est utilisé en tant qu'agent de traitement.

13. Procédé selon la revendication 12, **caractérisé en ce que** un matériau de coquillage broyé est utilisé en tant que matériau contenant CaCO₃.

14. Procédé selon une ou plusieurs des revendications 9 à 13, **caractérisé en ce que** l'agent de traitement comprend sensiblement un matériau ayant une taille de particule de moins de 100 µm.
